# FASCICULE DE BREVET EUROPEEN

(11) **EP 4 178 809 B1**
(45) Date de publication et mention de la délivrance du brevet: **29.01.2025**
(21) Numéro de dépôt: 21743225.1
(22) Date de dépôt: 29.06.2021
(51) Int. Cl.: B60C 1/00, B60C 11/00

(54) **PNEUMATIQUE PRESENTANT DES PROPRIETES DE RESISTANCE AU ROULEMENT AMELIOREES**
REIFEN MIT VERBESSERTEN ROLLWIDERSTANDSEIGENSCHAFTEN
TYRE HAVING IMPROVED ROLLING RESISTANCE PROPERTIES

(30) Priorité: 07.07.2020 FR 2007182
(43) Date de publication de la demande: 17.05.2023
(73) Titulaire: COMPAGNIE GENERALE DES ETABLISSEMENTS MICHELIN, 63000 Clermont-Ferrand (FR)
(72) Inventeur: REHAB, Hichem, 63040 CLERMONT-FERRAND Cedex 9 (FR); FLEURY, Etienne, 63040 CLERMONT-FERRAND CEDEX 9 (FR)
(74) Mandataire: M.F.P. Michelin
(86) Numéro de dépôt international: PCT/FR2021/051193
(87) Numéro de publication internationale: WO 2022/008817

(56) Documents cités:
- WO-A1-2019/211565
- FR-A1- 2 950 838
- US-A- 4 398 582

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Radialement à l'extérieur de l'armature de sommet, on trouve la bande de roulement habituellement constituée de matériaux polymériques destinés à venir au contact du sol dans l'aire de contact entre le sol et le pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet devient pénalisante.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités.

Pour limiter des élévations de température trop importantes au niveau du sommet du pneumatique, les matériaux constitutifs de la bande de roulement sont avantageusement choisis avec des pertes hystérétiques adaptées aux conditions de fonctionnement du pneumatique.

Par ailleurs, afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérèse, d'un profilé de caoutchouc couvrant au moins les côtés et les bords marginaux de l'armature de sommet et constitué d'un mélange caoutchouteux à faible hystérèse.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

La demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

La demande française WO 99/24269 propose encore, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

La couche d'éléments de renforcement circonférentiels est usuellement constituée par au moins un câble métallique enroulé pour former un ensemble de spires dont l'angle de pose par rapport à la direction circonférentielle est inférieur à 2.5°.

Afin d'augmenter encore la durée de vie des pneumatiques, il est usuel de choisir des matériaux polymériques constitutifs de la bande de roulement présentant des propriétés de résistance en usure améliorées. De tels matériaux pénalisant le plus souvent les propriétés hystérétiques, il est encore connu de réaliser la bande de roulement d'un pneumatique par une superposition radiale de deux matériaux différents pour obtenir un compromis des propriétés d'usure et d'hystérèse satisfaisant pour les applications envisagées.

De tels pneumatiques sont par exemple décrits dans le document US 6,247,512. Ce document décrit la superposition de deux couches de matériaux pour former la bande de roulement, le matériau externe venant au contact du sol étant notamment plus performant en termes d'usure alors que le matériau interne présente des propriétés hystérétiques permettant de limiter les montées en température du pneumatique dans la zone du sommet.

Des pneumatiques ainsi réalisés sont tout à fait satisfaisants pour les applications routières précitées. De telles conceptions de pneumatiques peuvent par contre être considérées comme onéreuses.

Le document US 4,398,582 A décrit un pneumatique comportant une bande de roulement permettant de modifier le compromis résistance au roulement, adhérence sur sol mouillé et usure.

Le document FR 2 950 838 A1 décrit un pneumatique permettant d'améliorer les performance d'endurance de l'armature de carcasse avec un coût de production réduit en diminuant les épaisseurs des mélanges formant la surface intérieure du pneumatique.

Le document WO 2019/211565 A1 décrit un pneumatique comportant une bande déroulement à faible conductivité thermique permettant de modifier le compromis résistance au roulement coût de fabrication.

Les inventeurs se sont ainsi donnés pour mission d'être en mesure de fournir des pneumatiques dont les performances d'usure et les performances d'endurance sont conservées, voire améliorées pour des usages routiers et dont le coût de fabrication est réduit tout en procurant des propriétés de résistance au roulement satisfaisantes.

Ce but est atteint selon l'invention par un pneumatique à armature de carcasse radiale comprenant une armature de sommet, elle-même coiffée radialement d'une bande de roulement, ladite bande de roulement étant réunie à deux bourrelets par l'intermédiaire de deux flancs, l'armature de sommet comportant au moins une couche d'éléments de renforcement circonférentiels, ladite bande de roulement comportant au moins une couche de mélange polymérique formant une surface de roulement destinée à venir en contact avec une chaussée, la conductivité thermique de ladite couche de mélange polymérique formant la surface de roulement étant strictement inférieure à 0.270 W/(m.K) et ladite couche de mélange polymérique formant la surface de roulement étant formée d'une composition de caoutchouc à base d'au moins une matrice élastomère comprenant à titre majoritaire un copolymère à base de styrène et de butadiène ayant une température de transition vitreuse Tg strictement supérieure à -65°C et inférieure ou égale à -30°C et, dans un plan radial, sur au moins 50% du profil méridien du pneumatique, l'épaisseur de mélange caoutchouteux entre la surface intérieure de la cavité du pneumatique et le point d'un élément de renforcement métallique de l'armature de carcasse le plus proche de ladite surface intérieure de la cavité étant inférieure à 4,5 mm.

La conductivité thermique des mélanges polymériques est mesurée conformément à la norme ISO 8302 :1991, intitulée Isolation thermique - Détermination de la résistance thermique et des propriétés connexes en régime stationnaire - Méthode de la plaque chaude gardée. La mesure est réalisée à 25°C sur des échantillons parallélépipédiques de 50 à 100 millimètres de côté présentant une épaisseur de 2.5 millimètres.

Par « matrice élastomère » ou « matrice élastomérique », on entend l'ensemble du ou des élastomère(s) présent(s) dans la composition de caoutchouc.

Par élastomère (ou indistinctement caoutchouc) « diénique » qu'il soit naturel ou synthétique, doit être compris un élastomère constitué au moins en partie (c'est-à-dire un homopolymère ou un copolymère) de monomère(s) diène(s) (i.e., porteur(s) de deux doubles liaisons carbone-carbone, conjuguées ou non).

Par copolymère à base de styrène et de butadiène, on entend ici un copolymère d'au moins un monomère styrène et d'au moins un monomère butadiène (et bien entendu également tout mélange de tels copolymères) ayant une température de transition vitreuse Tg strictement supérieure à -65°C et inférieure ou égale à -30°C; en d'autres termes, ledit copolymère à base de styrène et de butadiène comporte par définition au moins des unités styrène (issues du monomère styrène) et des unités butadiène (issues du monomère butadiène) et a une température de transition vitreuseTg strictement supérieure à -65°C et inférieure ou égale à -30°C.

Les valeurs de température de transition vitreuse « Tg » sont mesurées de manière connue par DSC (Differential Scanning Calorimetry) selon la norme ASTM D3418 (1999).

Au sens de l'invention, le profil méridien du pneumatique est défini par l'abscisse curviligne de la surface intérieure du pneumatique, au contact de la cavité du pneumatique, mesurée entre les deux points de cette surface formant une intersection avec une droite passant par les points radialement les plus extérieures de chacune des tringles.

La mesure de l'abscisse curviligne de la surface intérieure du pneumatique est réalisée sur une coupe d'un pneumatique, dont l'écartement des bourrelets est le même que lorsque le pneumatique est monté sur la jante de montage préconisée par l'ETRTO, celui-ci n'étant donc ni monté ni gonflé.

L'épaisseur de mélange caoutchouteux entre la surface intérieure de la cavité du pneumatique et le point d'un élément de renforcement le plus proche de ladite surface est égale à la longueur de la projection orthogonale de l'extrémité du point d'un élément de renforcement le plus proche de ladite surface sur la surface intérieure de la cavité du pneumatique.

Les mesures d'épaisseur de mélange caoutchouteux sont effectuées sur une coupe transversale d'un pneumatique, le pneumatique étant donc dans un état non gonflé.

Avantageusement selon l'invention, dans un plan radial, l'épaisseur de mélange caoutchouteux entre la surface intérieure de la cavité du pneumatique et le point d'un élément de renforcement métallique de l'armature de carcasse le plus proche de ladite surface intérieure de la cavité est inférieure à 4,5 mm sur au moins 70% du profil méridien du pneumatique, et de préférence encore sur au moins 80% du profil méridien du pneumatique.

Avantageusement selon l'invention, la composition de caoutchouc formant la couche de mélange polymérique formant la surface de roulement comprend au moins une charge renforçante comprenant à titre majoritaire une charge inorganique renforçante.

La composition de caoutchouc utilisée dans les pneumatiques de l'invention comporte au moins une charge renforçante comprenant à titre majoritaire une charge inorganique renforçante, c'est-à-dire que la masse de la charge inorganique renforçante représente au moins 51% de la masse totale des constituants de la charge renforçante. De préférence, la masse de la charge inorganique renforçante représente plus de 60 %, de préférence plus de 70% de la masse total de la charge renforçante.

Par « charge inorganique renforçante », doit être entendu ici toute charge inorganique ou minérale, quelles que soient sa couleur et son origine (naturelle ou de synthèse), encore appelée charge « blanche », charge « claire » ou même charge « non-noire » (« non-black filler ») par opposition au noir de carbone ; cette charge inorganique étant capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique. Une telle charge se caractérise généralement, de manière connue, par la présence de groupes hydroxyles (-OH) à sa surface, nécessitant pour être utilisée à titre de charge renforçante l'emploi d'un agent ou système de couplage destiné à assurer une liaison chimique stable la charge et la matrice élastomérique.

Comme charges renforçantes inorganiques conviennent notamment des charges minérales de type siliceuses, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil 7000 » et « Ultrasil 7005 » de la société Evonik, les silices « Zeosil 1165MP, 1135MP et 1115MP » ainsi que la silice « Zeosil Premium 200 » de la société Solvay, la silice « Hi-Sil EZ150G » de la société PPG, les silices « Zeopol 8715, 8745 et 8755 » de la Société Huber, les silices à haute surface spécifique telles que décrites dans la demande WO 03/016387.

Bien entendu, on entend également par charge renforçante inorganique des mélanges de différentes charges inorganiques renforçantes, en particulier de silices hautement dispersibles telles que décrites ci-dessus ou un mélange de charges inorganiques de type siliceuses et de charges inorganiques non siliceuses. A titre de charges inorganiques non siliceuses, on peut citer les charges minérales du type alumineuses, en particulier de l'alumine (Al₂O₃) ou des (oxydes)hydroxydes d'aluminium, ou encore des oxydes de titane renforçants, par exemple décrits dans US 6 610 261 et US 6 747 087. Les charges inorganiques non siliceuses, lorsque présentes, sont minoritaires dans la charge renforçante.

L'état physique sous lequel se présente la charge renforçante inorganique est indifférent, que ce soit sous forme de poudre, de microperles, de granulés, ou encore de billes.

Selon un mode de réalisation, le taux de la charge renforçante, dans la composition de caoutchouc du pneumatique conforme à l'invention peut aller de 55 pce à 200 pce, de préférence de 55 à 150 pce, de manière plus préférée va de 55 à 80 pce. Ces plages préférentielles s'appliquent à l'un quelconque des modes de réalisation de l'invention.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

Les essais réalisés ont montré que les pneumatiques selon l'invention présentent des performances d'usure et d'endurance satisfaisantes quelles que soient les conditions d'utilisation des pneumatiques. Ils présentent en outre des performances de résistance au roulement supérieures à celles des pneumatiques plus usuels décrits précédemment et ont pu être réalisés à des coûts réduits.

L'épaisseur de la couche de mélange caoutchouteux entre l'armature de carcasse et la cavité du pneumatique étant réduite par rapport à des pneumatiques usuels et celle-ci constituant un des composants les plus onéreux du pneumatique, le coût de fabrication du pneumatique est inférieur à celui d'un pneumatique usuel.

Les inventeurs ont par ailleurs su mettre en évidence qu'en comparaison avec des mélanges plus usuels pour obtenir une bande de roulement présentant de faibles pertes hystérétiques, la vitesse d'usure de la couche de la bande de roulement selon l'invention est considérablement améliorée.

En effet, la composition de caoutchouc à base d'au moins une matrice élastomère comprenant à titre majoritaire un copolymère à base de styrène et de butadiène ayant une température de transition vitreuse Tg strictement supérieure à -65°C et inférieure ou égale à -30°C associée à une conductivité thermique de ladite couche de mélange polymérique formant la surface de roulement strictement inférieure à 0.270 W/(m.K) et ladite couche de mélange polymérique formant la surface de roulement pouvant comprendre au moins une charge renforçante formée à titre majoritaire d'une charge inorganique renforçante confère des performances en résistance au roulement et des performances en termes d'usure élevées. Les inventeurs ont cependant su mettre en évidence que la faible conductivité thermique de ladite couche de mélange polymérique formant la surface de roulement conduit à une augmentation de la température de la bande de roulement du pneumatique, la chaleur générée lors des roulages ne s'évacuant que très lentement. Une telle augmentation de la température accentue le vieillissement des mélanges polymériques déjà soumis aux phénomènes de cisaillement entre les couches de travail de l'armature sommet et est donc défavorable aux performances en termes d'endurance. Les inventeurs ont toutefois su montrer que la couche d'éléments de renforcement circonférentiels permet de compenser cette montée en température due à la faible conductivité thermique du mélange et permet de conserver des performances d'endurance de l'armature sommet au niveau des attentes.

Les inventeurs encore soucieux des risques d'oxydation, notamment de l'armature de carcasse, liés à la présence d'agents oxydants au sein du pneumatique sous pression qui augmentent avec la durée de vie du pneumatique ont encore su mettre en évidence que l'augmentation de la température des mélanges formant la bande de roulement se transmet par conduction aux mélanges formant la paroi entre l'armature de carcasse et la cavité du pneumatique mise sous pression lors du gonflage. Cette augmentation de la température, notamment du mélange polymérique au contact de la couche d'armature de carcasse qui est prévu pour fixer l'oxygène qui migre depuis la cavité, renforce la réactivité dudit mélange qui va pouvoir fixer plus d'oxygène. Les inventeurs pensent ainsi expliquer que les propriétés d'endurance de l'armature de carcasse sont ainsi conservées alors que l'épaisseur de mélange caoutchouteux entre la surface intérieure de la cavité du pneumatique et le point d'un élément de renforcement métallique de l'armature de carcasse le plus proche de ladite surface intérieure de la cavité est réduite en comparaison de pneumatiques plus usuels.

Selon un mode de réalisation préféré de l'invention, le mélange caoutchouteux entre la cavité du pneumatique et les éléments de renforcement de la couche d'armature de carcasse radialement la plus à l'intérieure étant constitué d'au moins deux couches de mélange caoutchouteux, dans un plan radial, sur au moins la partie du profil méridien du pneumatique sur laquelle l'épaisseur de mélange caoutchouteux entre la surface intérieure de la cavité du pneumatique et le point d'un élément de renforcement métallique de l'armature de carcasse le plus proche de la dite surface intérieure de la cavité est inférieure à 4.5 mm, la couche de mélange caoutchouteux radialement la plus à l'intérieur présente une épaisseur inférieure à 2 mm et de préférence inférieure à 1.8 mm. Comme expliqué précédemment, cette couche est habituellement pour partie composée de butyle de façon à augmenter l'étanchéité du pneumatique et ce type de matériau présentant un coût non négligeable, la diminution de cette couche est favorable.

De préférence encore selon l'invention, dans un plan radial, sur au moins la partie du profil méridien du pneumatique sur laquelle l'épaisseur de mélange caoutchouteux entre la surface intérieure de la cavité du pneumatique et le point d'un élément de renforcement métallique de l'armature de carcasse le plus proche de la dite surface intérieure de la cavité est inférieure à 4.5 mm, la couche de mélange caoutchouteux radialement adjacente à la couche de mélange caoutchouteux radialement la plus à l'intérieur présente une épaisseur inférieure à 2.5 mm et de préférence inférieure à 2 mm. L'épaisseur de cette couche dont les constituants permettent notamment de fixer l'oxygène de l'air peut également être réduite de façon à diminuer encore le coût du pneumatique.

Les épaisseurs de chacune de ces deux couches sont égales à la longueur de la projection orthogonale d'un point d'une surface sur l'autre surface de ladite couche.

Avantageusement encore selon l'invention, la conductivité thermique de ladite couche de mélange polymérique formant la surface de roulement est strictement inférieure à 0.265 W/(m.K).

Selon un mode de réalisation de l'invention, la composition de caoutchouc de ladite au moins une couche de mélange polymérique formant la surface de roulement du pneumatique comporte un système plastifiant comprenant de 0 à 15 pce, de préférence de 0 à 9 pce, d'au moins une résine plastifiante ayant une température de transition vitreuse Tg supérieure ou égale à 20°C, et dont le taux total du système plastifiant dans la composition va de 0 à 17 pce, de préférence de 0 à 11 pce.

L'abréviation « pce » (usuellement « phr » en anglais pour « per hundred part of rubber ») signifie parties en poids pour cent parties d'élastomères (du total des élastomères si plusieurs élastomères sont présents) ou caoutchouc présents dans la composition de caoutchouc.

Avantageusement selon l'invention, le système plastifiant peut comprendre de 2 à 15 pce, de préférence de 2 à 9 pce de la résine plastifiante, le taux total du système plastifiant dans la composition va de 2 à 17 pce, de préférence de 2 à 11 pce.

De préférence, le copolymère à base de styrène et de butadiène peut être obtenu par polymérisation en solution.

De préférence, le copolymère à base de styrène et de butadiène a une température de transition vitreuse Tg allant de -60°C à -40°C.

De préférence, le copolymère à base de styrène et à base de butadiène peut être un copolymère styrène-butadiène.

Dans un mode de réalisation de l'invention, la matrice élastomère peut comprendre en outre au moins un deuxième élastomère diénique différent du copolymère à base de styrène et de butadiène ; en particulier, ledit deuxième élastomère diénique étant choisi dans le groupe formé par les polybutadiènes, le caoutchouc naturel, les isoprènes de synthèse, les copolymères butadiènes autre que les copolymères butadiène-styrène, les copolymères d'isoprènes et les mélanges de ces polymères et copolymères ; de préférence ledit deuxième élastomère diénique peut être un polybutadiène.

De préférence, le taux du deuxième élastomère diénique peut aller de 5 à 49 pce, de préférence de 15 à 35 pce.

Dans un mode de réalisation de l'invention, la matrice élastomère peut comprendre en outre au moins un troisième élastomère diénique différent du copolymère à base de styrène et de butadiène et du deuxième élastomère diénique, en particulier le troisième élastomère diénique peut être choisi parmi le caoutchouc naturel et un élastomère isoprénique, de préférence il peut être constitué par du caoutchouc naturel.

De préférence, le taux du deuxième élastomère diénique peut aller de 0,5 à 35 pce et un taux du troisième élastomère diénique peut aller de 0,5 à 35 pce, de préférence le taux du deuxième élastomère diénique peut aller de 9 à 31 pce et un taux du troisième élastomère diénique peut aller de 4 à 24 pce.

De préférence, la composition peut comprendre en outre du noir de carbone ; en particulier le taux de noir de carbone peut être inférieur ou égal à 10 pce, inférieur ou égal à 5 pce, de préférence le taux de noir de carbone peut aller de 0,5 à 4 pce.

De préférence, le taux de la charge renforçante peut aller de 55 à 200 pce, de préférence de 55 à 150 pce, de manière plus préférée de 55 à 80 pce

De préférence, la résine plastifiante peut avoir une température de transition vitreuse Tg supérieure ou égale à 30°C, de préférence allant de à 30 à 100°C ; et en particulier, la résine plastifiante peut être choisie dans le groupe constitué par les résines d'homopolymère ou copolymère de cyclopentadiène, les résines d'homopolymère ou copolymère de dicyclopentadiène, les résines d'homopolymère ou copolymère de terpène, les résines d'homopolymère ou copolymère de coupe C5, les résines d'homopolymère ou copolymère de coupe C9, les résines d'homopolymère, notamment les mélanges de résines d'homopolymère ou copolymère de coupe C5 et de résines d'homopolymère ou copolymère de coupe C9 et les résines de copolymère d'alpha-méthyl-styrène et les mélanges de ces résines.

De préférence, le système plastifiant peut comprendre de 0 à 2 pce d'au moins un agent plastifiant liquide à température ambiante (23°C).

Selon un autre mode de réalisation, la composition de caoutchouc de pneumatiques conformes à l'invention peut être exempte de système plastifiant.

Selon une variante avantageuse de réalisation de l'invention, la couche d'éléments de renforcement circonférentiels présente une largeur axiale supérieure à 0.5xW.

W est la largeur maximale axiale du pneumatique, lorsque ce dernier est monté sur sa jante de service et gonflé à sa pression recommandée.

Les largeurs axiales des couches d'éléments de renforcement sont mesurées sur une coupe transversale d'un pneumatique, le pneumatique étant donc dans un état non gonflé.

Selon un mode de réalisation préférée de l'invention, l'armature sommet étant constituée d'au moins deux couches d'éléments de renforcement, une couche d'éléments de renforcement circonférentiels est radialement disposée entre deux couches de sommet de travail.

Selon ce mode de réalisation de l'invention, la couche d'éléments de renforcement circonférentiels permet de limiter de manière plus importante les mises en compression des éléments de renforcement de l'armature de carcasse qu'une couche semblable mise en place radialement à l'extérieur des couches de travail. Elle est préférablement radialement séparée de l'armature de carcasse par au moins une couche de travail de façon à limiter les sollicitations desdits éléments de renforcement et ne pas trop les fatiguer.

Selon une réalisation préférée de l'invention, au moins deux couches de sommet de travail présentent des largeurs axiales différentes, la différence entre la largeur axiale de la couche de sommet de travail axialement la plus large et la largeur axiale de la couche de sommet de travail axialement la moins large étant comprise entre 10 et 30 mm.

Selon un mode de réalisation préféré de l'invention, la couche de sommet de travail axialement la plus large est radialement à l'intérieur des autres couches de sommet de travail.

Avantageusement encore selon l'invention, les largeurs axiales des couches de sommet de travail radialement adjacentes à la couche d'éléments de renforcement circonférentiels sont supérieures à la largeur axiale de ladite couche d'éléments de renforcement circonférentiels et de préférence, lesdites couches de sommet de travail adjacentes à la couche d'éléments de renforcement circonférentiels sont de part et d'autre du plan équatorial et dans le prolongement axial immédiat de la couche d'éléments de renforcement circonférentiels couplées sur une largeur axiale, pour être ensuite découplées par une couche de mélange de caoutchouc au moins sur le restant de la largeur commune aux dites deux couches de travail.

La présence de tels couplages entre les couches de sommet de travail adjacentes à la couche d'éléments de renforcement circonférentiels permet la diminution des contraintes de tension agissant sur les éléments circonférentiels axialement le plus à l'extérieur et situé le plus près du couplage.

Selon un mode de réalisation avantageux de l'invention, les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa, la contrainte de traction correspondant à une tension mesurée ramenée à la section de métal de l'élément de renforcement. Les mesures sont réalisées sur des câbles extraits du pneumatique sur une partie de la couche d'éléments de renforcement circonférentiels s'étendant depuis une extrémité axiale de ladite couche sur une largeur axiale de 50 mm vers l'intérieur de ladite couche.

Les modules des mêmes éléments de renforcement peuvent être mesurés sur une courbe contrainte de traction en fonction de l'allongement déterminée avec une précontrainte de 10 MPa, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique ; cette section globale de l'élément de renforcement concerné est approximativement le double de la section de métal de l'élément de renforcement.

Selon cette formulation relative à la section globale de l'élément de renforcement, les éléments de renforcement des parties axialement extérieures et de la partie centrale d'au moins une couche d'éléments de renforcement circonférentiels sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 Gpa et supérieur à 10 GPa, de préférence compris entre 15 et 45 GPa et de préférence encore inférieure à 40 GPa.

De préférence également, le module tangent maximum des éléments de renforcement est inférieur à 65 GPa et de préférence encore inférieur à 60 GPa.

Selon un mode de réalisation préféré, les éléments de renforcements d'au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche d'éléments de renforcement circonférentiels selon l'invention sont par exemple des assemblages de formule 21.23, dont la construction est 3x(0.26+6x0.23) 4.4/6.6 SS ; ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3x(0.32+6x0.28) 6.2/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans au moins une couche d'éléments de renforcement circonférentiels permet notamment de conserver des rigidités de la couche satisfaisante y compris après les étapes de conformation et de cuisson dans des procédés de fabrication usuels.

Selon un deuxième mode de réalisation de l'invention, les éléments de renforcement circonférentiels peuvent être formées d'éléments métalliques inextensibles et coupés de manière à former des tronçons de longueur très inférieure à la circonférence de la couche la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la couche additionnelle est inférieur au module d'élasticité à la traction, mesuré dans les mêmes conditions, de la couche de sommet de travail la plus extensible. Un tel mode de réalisation permet de conférer, de manière simple, à la couche d'éléments de renforcement circonférentiels un module pouvant facilement être ajusté (par le choix des intervalles entre tronçons d'une même rangée), mais dans tous les cas, plus faible que le module de la couche constituée des mêmes éléments métalliques mais continus, le module de la couche additionnelle étant mesuré sur une couche vulcanisée d'éléments coupés, prélevée sur le pneumatique.

Selon un troisième mode de réalisation de l'invention, les éléments de renforcement circonférentiels sont des éléments métalliques ondulés, le rapport a/λ de l'amplitude d'ondulation sur la longueur d'onde étant au plus égale à 0,09. De préférence, le module d'élasticité à la traction par unité de largeur de la couche additionnelle est inférieur au module d'élasticité à la traction, mesuré dans les mêmes conditions, de la couche de sommet de travail la plus extensible.

Les éléments métalliques sont préférentiellement des câbles d'acier.

Selon un mode de réalisation préféré de l'invention, les éléments de renforcement des couches de sommet de travail d'éléments de renforcement sont des câbles métalliques inextensibles.

Avantageusement selon l'invention, l'armature de sommet est formée d'au moins deux couches de sommet de travail d'éléments de renforcement, croisés d'une couche à l'autre en faisant avec la direction circonférentielle des angles compris entre 10° et 45°.

L'invention prévoit encore avantageusement pour diminuer les contraintes de tension agissant sur les éléments circonférentiels axialement le plus à l'extérieur que l'angle formé avec la direction circonférentielle par les éléments de renforcement des couches de sommet de travail d'éléments de renforcement est inférieur à 30° et de préférence inférieur à 25°.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments de renforcement de la couche de sommet de travail d'éléments de renforcement qui lui est radialement adjacente.

Selon l'un quelconque des modes de réalisation de l'invention évoqué précédemment, l'armature de sommet peut encore être complétée, radialement à l'intérieur entre l'armature de carcasse et la couche de sommet de travail d'éléments de renforcement radialement intérieure la plus proche de ladite armature de carcasse, par une couche de triangulation d'éléments de renforcement inextensibles métalliques en acier faisant, avec la direction circonférentielle, un angle supérieur à 45° et de même sens que celui de l'angle formé par les éléments de renforcement de la couche de sommet de travail d'éléments de renforcement radialement la plus proche de l'armature de carcasse.

D'autres détails et caractéristiques avantageux de l'invention ressortiront ci-après de la description des exemples de réalisation de l'invention en référence aux figures qui représentent :
- figure 1, une vue méridienne d'un schéma d'un pneumatique selon l'invention,
- figure 2, une vue partielle agrandie d'une partie du schéma de la figure 1.

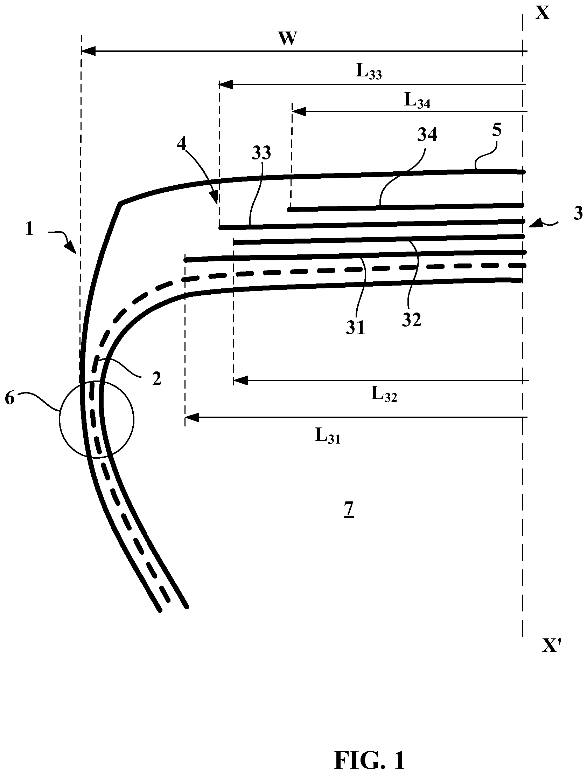

Les figures ne sont pas représentées à l'échelle pour en simplifier la compréhension. La figure 1 ne représente qu'une demi-vue d'un pneumatique qui se prolonge de manière symétrique par rapport à l'axe XX' qui représente le plan médian circonférentiel, ou plan équatorial, d'un pneumatique.

Sur la figure 1, est représenté le pneumatique 1 de dimension 315/70 R 22.5. Ledit pneumatique 1 comprend une armature de carcasse radiale 2 ancrée dans deux bourrelets, non représentés sur la figure. L'armature de carcasse est frettée par une armature de sommet 3, formée radialement de l'intérieur à l'extérieur :
- d'une première couche de travail 31 formée de câbles métalliques inextensibles 9.30 non frettés, continus sur toute la largeur de la nappe, orientés d'un angle égal à 26°,
- d'une couche d'éléments de renforcement circonférentiels 32 formée de câbles métalliques en acier 21x23, de type "bi-module",
- d'une seconde couche de travail 33 formée de câbles métalliques inextensibles 9.30 non frettés, continus sur toute la largeur de la nappe, orientés d'un angle égal à 18° et croisés avec les câbles métalliques de la couche 31,
- d'une couche de protection 34 formées de câbles métalliques élastiques 6.35.

L'armature de sommet est elle-même coiffée d'une bande de roulement 4 présentant une surface 5 destinée à venir au contact du sol.

La largeur axiale maximale W du pneumatique est égale à 317 mm.

La largeur axiale L₃₁ de la première couche de travail 31 est égale à 252 mm.

La largeur axiale L₃₃ de la deuxième couche de travail 33 est égale à 232 mm.

Quant à la largeur axiale L₃₂ de la couche d'éléments de renforcement circonférentiels 32, elle est égale à 194 mm.

La dernière nappe de sommet 34, dite de protection, a une largeur L44 égale à 124 mm.

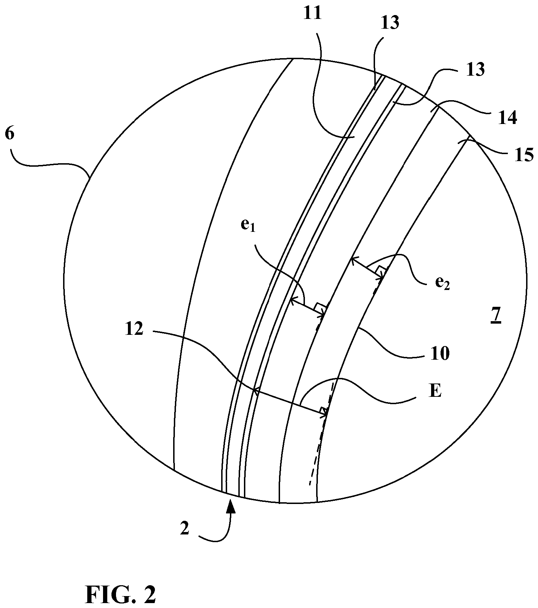

La figure 2 illustre un agrandissement de la zone 6 de la figure 1 et indique notamment l'épaisseur E de mélange caoutchouteux entre la surface intérieure 10 de la cavité 7 du pneumatique et le point 12 d'un élément de renforcement 11 le plus proche de ladite surface 10. Cette épaisseur E est égale à la longueur de la projection orthogonale du point 12 d'un élément de renforcement 11 le plus proche de ladite surface 10 sur la surface 10. Cette épaisseur E est la somme des épaisseurs des différents mélanges caoutchouteux mis en place entre ledit élément de renforcement 11 de l'armature de carcasse 2 ; il s'agit d'une part de l'épaisseur de la couche de calandrage 13 radialement intérieure de l'armature de carcasse et d'autre part, des épaisseurs e₁, e₂ des différentes couches 14, 15 de mélange caoutchouteux formant la paroi interne du pneumatique 1. Ces épaisseurs e₁, e₂ sont par ailleurs égales à la longueur de la projection orthogonale d'un point d'une surface sur l'autre surface de la couche concernée respectivement 14 ou 15.

Ces mesures d'épaisseur sont effectuées sur une coupe transversale du pneumatique, celui-ci étant par conséquent non monté et non gonflé.

La valeur de E mesurée est égale à 3.5 mm.

Les valeurs de ei et e₂ sont respectivement égales à 1.5 mm et 1.5 mm.

Ces valeurs sont mesurées sur 100% du profil méridien, tel que défini précédemment.

Des essais ont été réalisés avec des pneumatiques réalisés selon l'invention conformément à la représentation des figures 1 et 2, et d'autres avec des pneumatiques dits de référence.

Les taux des différents constituants des compositions présentées dans le tableau suivant sont exprimés en pce. Toutes les compositions (T1, T2 et C) comprennent un système de réticulation classiquement utilisé dans la fabrication de bandes de roulement pour pneumatique ; ce système de réticulation comprenant notamment du soufre, du ZnO de l'acide stéarique et un accélérateur.

| | **T1** | **T2** | **C1** |
|---|---|---|---|
| **SBR (1)** | - | - | 65.00 |
| **SBR (2)** | 40.00 | 40.00 | |
| **NR (3)** | 40.00 | 40.00 | 15.00 |
| **BR (4)** | 20.00 | 20.00 | 20.00 |
| **Silice (5)** | - | - | 60.00 |
| **Noir de carbone (6)** | 58.00 | - | 4.00 |
| **Noir de carbone (7)** | - | 58.00 | - |
| **Agent de couplage (8)** | - | - | 6.00 |
| **DPG (9)** | - | - | 0.90 |
| **Antioxydant (10)** | 2.00 | 2.00 | 2.00 |
| **Résine (11)** | 3.00 | 3.00 | 3.00 |
| **Paraffine** | 1.00 | 1.00 | 1.00 |

| | | | |
|---|---|---|---|
| *(1) SBR solution non fonctionnel, non étendu, avec 24% de motifs butadiéniques 1,2 par rapport au total des motifs butadiéniques ; 26.5% de motifs styrène et une Tg = -48°C ;* *(2) SBR solution fonctionnalisé étain, non étendu, avec 24% de motifs butadiéniques 1,2 par rapport au total des motifs butadiéniques: 15,5% de motifs styrène, et une Tg = -65° C ;* *(3) Caoutchouc naturel ;* *(4) Polybutadiène Néodyme avec 98% de motifs 1,4-cis butadiène et une Tg = -108°C ;* *(5) Silice « Zeosil 1165 MP » type « HDS » de la société Solvay ;* *(6) Noir de carbone N234 ;* *(7) Noir de carbone N134 ;* *(8) Agent de couplage : TESPT (« Si69 » de la société Evonik* - *Degussa) ;* *(9) Diphénylguanidine (« Perkacit » DPG de la société Flexsys) ;* *(10) N-1,3-diméthylbutyl-N-phényl-para-phénylènediamine commercialisée par la société Flexsys sous la dénomination "Santoflex 6-PPD" ;* *(11) Résine coupe C5*/*C9 commercialisée par la société Cray Valley sous la dénomination « Résine THER 8644 » (Tg = 44°C).* | | | |

Les propriétés de conductivité thermique des compositions sont présentées dans le tableau ci-dessous.

| | **T1** | **T2** | **C** |
|---|---|---|---|
| Conductivité (W/(m.K)) | 0.294 | 0.294 | 0.263 |

Les pneumatiques I selon l'invention sont réalisés conformément aux figures 1 et 2. Leurs bandes de roulement sont constituées du mélange C.

Des premiers pneumatiques de référence P1 et P2 ont des bandes de roulement constituées respectivement des mélanges T1 et T2. Ces pneumatiques de référence P1 et P2 diffèrent par ailleurs des pneumatiques selon l'invention par une épaisseur E de mélange caoutchouteux entre la surface intérieure de la cavité du pneumatique et le point d'un élément de renforcement le plus proche de ladite surface étant égale à 5 mm, chacune des épaisseurs ei et e₂ étant respectivement égales à 2.2 mm et 2.3 mm.

Les coûts de fabrication de ces pneumatiques de référence P1 et P2 sont augmentés d'environ 7 % par rapport aux pneumatiques selon l'invention.

Par ailleurs, les pneumatiques selon l'invention présentent l'avantage d'être moins lourd avec un allègement de 6 % par rapport aux pneumatiques de référence P1 et P2.

D'autres pneumatiques de référence P3 ont été réalisés. Ils sont semblables aux pneumatiques I de l'invention et leur architecture sommet diffère en ce que l'armature sommet ne comporte pas de couche d'éléments de renforcement circonférentiels. Ils sont réalisés avec une bande de roulement constituée du mélanges C.

Des essais de résistance à l'usure ont été effectués en comparant les pneumatiques I selon l'invention aux pneumatiques référence P1 et P2 en équipant des véhicules identiques avec chacun de ces pneumatiques.

Les essais ont été réalisés dans des conditions identiques en termes de charge et de pression et sur des parcours identiques, représentatifs d'un usage normal. Les résultats consistent en la mesure de perte de poids.

Les résultats des essais sont présentés dans le tableau suivant.

Les mesures sont exprimées en Kg, une valeur de 100 étant attribuée au pneumatique P1. Des valeurs supérieures à 100 montrent de meilleures performances en usure.

| | **P1** | **P2** | **I** |
|---|---|---|---|
| usure | 100 | 105 | 115 |

Ces derniers résultats mettent en évidence une meilleure résistance à l'usure des pneumatiques I selon l'invention.

Des premiers essais d'endurance ont été réalisés sur une machine de test imposant à chacun des pneumatiques un roulage ligne droite à une vitesse égale à l'indice de vitesse maximum prescrit pour ledit pneumatique (speed index) sous une charge initiale de 4000 Kg progressivement augmentée pour réduire la durée du test.

Des deuxièmes essais d'endurance ont été réalisés sur une machine de tests imposant de façon cyclique un effort transversal et une surcharge dynamique aux pneumatiques. Les essais ont été réalisés pour les pneumatiques selon l'invention avec des conditions identiques à celles appliquées aux pneumatiques de référence.

Les essais ainsi réalisés ont montré que les distances parcourues lors de chacun de ces tests sont équivalentes pour les pneumatiques I selon l'invention et les pneumatiques de référence P1 et P2. Il apparaît donc que les pneumatiques selon l'invention présentent des performances en termes d'endurance aussi bonnes que celles des pneumatiques de référence.

Les pneumatiques P3 ont quant à eux parcouru des distances beaucoup moins importantes, environ égale à la moitié de celles parcourues par les pneumatiques I selon l'invention et les pneumatiques de référence P1 et P2.

Des derniers essais d'endurance en roulage sur volant ont été réalisés sur une machine de tests imposant aux pneumatiques une charge de 4415 daN et une vitesse de 40 km/h, avec un gonflage des pneumatiques dopé en oxygène. Les essais ont été réalisés pour les pneumatiques I selon l'invention avec des conditions identiques à celles appliquées aux pneumatiques de référence P1 et P2. Les roulages sont arrêtés dès que les pneumatiques présentent des dégradations de l'armature de carcasse.

Les essais ainsi réalisés ont montré que les distances parcourues lors de chacun de ces tests sont équivalentes pour les pneumatiques I selon l'invention et les pneumatiques de référence P1 et P2 qui ont parcouru environ 220 000 km.

Par ailleurs, des mesures de résistance au roulement ont été effectuées. Ces mesures ont porté sur les pneumatiques de référence P1 et P2 et sur les pneumatiques selon l'invention I.

Les résultats des essais sont présentés dans le tableau suivant.

Les mesures de résistance au roulement sont exprimées en Kg/t, une valeur de 100 étant attribuée au pneumatique P1. Des valeurs supérieures à 100 montrent de meilleures performances en résistance au roulement.

| | P1 | P2 | I |
|---|---|---|---|
| Résistance au roulement | 100 | 96 | 104 |

Il ressort de ces essais que les pneumatiques selon l'invention permettent d'améliorer les performances en termes d'endurance et d'usure et en présentant des performances en termes de résistance au roulement satisfaisantes.

## Revendications

1. Pneumatique (1) à armature de carcasse radiale (2) comprenant une armature de sommet (3), elle-même coiffée radialement d'une bande de roulement (4), ladite bande de roulement étant réunie à deux bourrelets par l'intermédiaire de deux flancs, l'armature de sommet (3) comportant au moins une couche d'éléments de renforcement circonférentiels (32), ladite bande de roulement comportant au moins une couche de mélange polymérique formant une surface de roulement (5) destinée à venir en contact avec une chaussée, **caractérisé en ce que** la conductivité thermique de ladite couche de mélange polymérique formant la surface de roulement est strictement inférieure à 0.270 W/(m.K), avec la conductivité thermique étant mesurée conformément à la norme ISO 8302 :1991, **en ce que** ladite couche de mélange polymérique formant la surface de roulement est formée d'une composition de caoutchouc à base d'au moins une matrice élastomère comprenant à titre majoritaire un copolymère à base de styrène et de butadiène ayant une température de transition vitreuse Tg strictement supérieure à -65°C et inférieure ou égale à -30°C et **en ce que,** dans un plan radial, sur au moins 50% du profil méridien du pneumatique, l'épaisseur (E) de mélange caoutchouteux entre la surface intérieure (10) de la cavité (7) du pneumatique et le point d'un élément de renforcement métallique de l'armature de carcasse le plus proche de ladite surface intérieure de la cavité est inférieure à 4.5 mm.

2. Pneumatique (1) selon la revendication 1, **caractérisé en ce que,** dans un plan radial, l'épaisseur (E) de mélange caoutchouteux entre la surface intérieure de la cavité (7) du pneumatique et le point d'un élément de renforcement métallique de l'armature de carcasse le plus proche de ladite surface intérieure de la cavité est inférieure à 4.5 mm sur au moins 70% du profil méridien du pneumatique, et de préférence, sur au moins 80% du profil méridien du pneumatique.

3. Pneumatique (1) selon la revendication 1 ou 2, **caractérisé en ce que** la composition de caoutchouc de ladite au moins une couche de mélange polymérique formant la surface de roulement du pneumatique comporte au moins une charge renforçante comprenant à titre majoritaire une charge inorganique renforçante.

4. Pneumatique (1) selon la revendication 3, **caractérisé en ce que** la charge inorganique renforçante est de la silice.

5. Pneumatique (1) selon l'une des revendications précédentes, le mélange caoutchouteux entre la cavité du pneumatique et les éléments de renforcement de la couche d'armature de carcasse radialement la plus à l'intérieur étant constitué d'au moins deux couches de mélange caoutchouteux, **caractérisé en ce que,** dans un plan radial, sur au moins la partie du profil méridien du pneumatique sur laquelle l'épaisseur de mélange caoutchouteux entre la surface intérieure de la cavité du pneumatique et le point d'un élément de renforcement métallique de l'armature de carcasse le plus proche de la dite surface intérieure de la cavité est inférieure à 4.5 mm, la couche de mélange caoutchouteux (15) radialement la plus à l'intérieur présente une épaisseur (e₂) inférieure à 2 mm et de préférence inférieure à 1.8 mm.

6. Pneumatique (1) selon l'une des revendications précédentes, le mélange caoutchouteux entre la cavité du pneumatique et les éléments de renforcement de la couche d'armature de carcasse radialement la plus à l'intérieur étant constitué d'au moins deux couches de mélange caoutchouteux (14, 15), **caractérisé en ce que,** dans un plan radial, sur au moins la partie du profil méridien du pneumatique sur laquelle l'épaisseur de mélange caoutchouteux entre la surface intérieure de la cavité du pneumatique et le point d'un élément de renforcement métallique de l'armature de carcasse le plus proche de la dite surface intérieure de la cavité est inférieure à 4.5 mm, la couche de mélange caoutchouteux (14) radialement adjacente à la couche de mélange caoutchouteux radialement la plus à l'intérieur présente une épaisseur (e₁) inférieure à 2.5 mm et de préférence inférieure à 2 mm.

7. Pneumatique (1) selon l'une des revendications précédentes, **caractérisé en ce que** la conductivité thermique de ladite couche de mélange polymérique formant la surface de roulement est strictement inférieure à 0.265 W/(m.K).

8. Pneumatique (1) selon l'une des revendications précédentes, **caractérisé en ce que** la composition de caoutchouc de ladite au moins une couche de mélange polymérique formant la surface de roulement du pneumatique comporte un système plastifiant comprenant de 0 à 15 pce, de préférence de 0 à 9 pce, d'au moins une résine plastifiante ayant une température de transition vitreuse Tg supérieure ou égale à 20°C, et dont le taux total du système plastifiant dans la composition va de 0 à 17 pce, de préférence de 0 à 11 pce.

9. Pneumatique (1) selon l'une des revendications précédentes, **caractérisé en ce que** le copolymère à base de styrène et de butadiène a une température de transition vitreuse Tg allant de -60°C à -40°C.

10. Pneumatique (1) selon l'une des revendications précédentes, **caractérisé en ce que** le copolymère à base de styrène et à base de butadiène est un copolymère styrène-butadiène.

11. Pneumatique (1) selon la revendication 10, **caractérisé en ce que** la matrice élastomère comprend en outre au moins un deuxième élastomère diénique différent du copolymère à base de styrène et de butadiène.

12. Pneumatique (1) selon l'une des revendications précédentes, l'armature de sommet (3) comportant au moins deux couches de sommet de travail d'éléments de renforcement (31, 33), **caractérisé en ce que** ladite au moins une couche d'éléments de renforcement circonférentiels (32) est radialement disposée entre deux couches de sommet de travail d'éléments de renforcement (31, 33).

13. Pneumatique (1) selon l'une des revendications précédentes, **caractérisé en ce que** l'armature de sommet (3) comporte au moins deux couches de sommet de travail d'éléments de renforcement (31, 33), de préférence inextensibles, croisés d'une couche à l'autre en faisant avec la direction circonférentielle des angles compris entre 10° et 45°.

14. Pneumatique (1) selon l'une des revendications précédentes, **caractérisé en ce que** les éléments de renforcement de ladite au moins une couche d'éléments de renforcement circonférentiels (32) sont des éléments de renforcement métalliques présentant un module sécant à 0,7 % d'allongement compris entre 10 et 120 GPa et un module tangent maximum inférieur à 150 GPa.

15. Pneumatique (1) selon l'une des revendications précédentes, **caractérisé en ce que** l'armature de sommet (3) est complétée radialement à l'extérieur par au moins une couche supplémentaire (34), dite de protection, d'éléments de renforcement dits élastiques, orientés par rapport à la direction circonférentielle avec un angle compris entre 10° et 45° et de même sens que l'angle formé par les éléments de renforcement de la couche de sommet de travail d'éléments de renforcement (33) qui lui est radialement adjacente.

## Patentansprüche

1. Reifen (1) mit Radialkarkassenverstärkung (2), beinhaltend eine Gürtelverstärkung (3), die wiederum radial von einem Laufstreifen (4) überdeckt wird, wobei der Laufstreifen über zwei Flanken mit zwei Wülsten verbunden ist, wobei die Gürtelverstärkung (3) mindestens eine Lage aus umfänglichen Festigkeitsträgerelementen (32) umfasst, wobei der Laufstreifen mindestens eine Lage aus Polymermischung umfasst, die eine Lauffläche (5) bildet, die dazu bestimmt ist, mit einer Fahrbahn in Kontakt zu kommen, **dadurch gekennzeichnet, dass** die Wärmeleitfähigkeit der Lage aus Polymermischung, die die Lauffläche bildet, strikt kleiner als 0,270 W/(m.K) ist, wobei die Wärmeleitfähigkeit nach der Norm ISO 8302:1991 gemessen wird, und dass die Lage aus Polymermischung, die die Lauffläche bildet, aus einer Kautschukzusammensetzung auf Basis von mindestens einer Elastomermatrix, welche überwiegend ein Copolymer auf Basis von Styrol und Butadien beinhaltet, das eine Glasübergangstemperatur Tg von strikt größer als -65 °C und kleiner als oder gleich -30 °C hat, und dass, in einer radialen Ebene, über mindestens 50 % des Meridianprofils des Reifens, die Kautschukmischungsdicke (E) zwischen der Innenfläche (10) des Hohlraums (7) des Reifens und dem zu der Innenfläche des Hohlraums nächstgelegenen Punkt eines metallischen Festigkeitsträgerelements kleiner als 4,5 mm ist.

2. Reifen (1) nach Anspruch 1, **dadurch gekennzeichnet, dass**, in einer radialen Ebene, die Kautschukmischungsdicke (E) zwischen der Innenfläche des Hohlraums (7) des Reifens und dem zu der Innenfläche des Hohlraums nächstgelegenen Punkt eines metallischen Festigkeitsträgerelements über mindestens 70 % des Meridianprofils des Reifens und vorzugsweise über mindestens 80 % des Meridianprofils des Reifens kleiner als 4,5 mm ist.

3. Reifen (1) nach Anspruch 1 oder 2, **dadurch gekennzeichnet, dass** die Kautschukzusammensetzung der mindestens einen Lage aus Polymermischung, die die Lauffläche des Reifens bildet, mindestens einen verstärkenden Füllstoff umfasst, der überwiegend einen verstärkenden anorganischen Füllstoff beinhaltet.

4. Reifen (1) nach Anspruch 3, **dadurch gekennzeichnet, dass** der verstärkende anorganische Füllstoff Siliciumdioxid ist.

5. Reifen (1) nach einem der vorhergehenden Ansprüche, wobei die Kautschukmischung zwischen dem Hohlraum des Reifens und den Festigkeitsträgerelementen der radial innersten Karkassenverstärkungslage aus mindestens zwei Lagen aus Kautschukmischung besteht, **dadurch gekennzeichnet, dass**, in einer radialen Ebene, über mindestens den Teil des Meridianprofils des Reifens, über den die Kautschukmischungsdicke zwischen der Innenfläche des Hohlraums des Reifens und dem zu der Innenfläche des Hohlraums nächstgelegenen Punkt eines metallischen Festigkeitsträgerelements kleiner als 4,5 mm ist, die radial innerste Lage aus Kautschukmischung (15) eine Dicke (e₂) kleiner als 2 mm und vorzugsweise kleiner als 1,8 mm aufweist.

6. Reifen (1) nach einem der vorhergehenden Ansprüche, wobei die Kautschukmischung zwischen dem Hohlraum des Reifens und den Festigkeitsträgerelementen der radial innersten Karkassenverstärkungslage aus mindestens zwei Lagen aus Kautschukmischung (14, 15) besteht, **dadurch gekennzeichnet, dass**, in einer radialen Ebene, über mindestens den Teil des Meridianprofils des Reifens, über den die Kautschukmischungsdicke zwischen der Innenfläche des Hohlraums des Reifens und dem zu der Innenfläche des Hohlraums nächstgelegenen Punkt eines metallischen Festigkeitsträgerelements kleiner als 4,5 mm ist, die Lage aus Kautschukmischung (14), die zu der radial innersten Lage aus Kautschukmischung radial benachbart ist, eine Dicke (e₁) kleiner als 2,5 mm und vorzugsweise kleiner als 2 mm aufweist.

7. Reifen (1) nach einem der vorhergehenden Ansprüche, **dadurch gekennzeichnet, dass** die Wärmeleitfähigkeit der Lage aus Polymermischung, die die Lauffläche bildet, strikt kleiner als 0,265 W/(m.K) ist.

8. Reifen (1) nach einem der vorhergehenden Ansprüche, **dadurch gekennzeichnet, dass** die Kautschukzusammensetzung der mindestens einen Lage aus Polymermischung, die die Lauffläche des Reifens bildet, ein Weichmachersystem umfasst, das 0 bis 15 phe, vorzugsweise 0 bis 9 phe, mindestens eines Weichmacherharzes beinhaltet, das eine Glasübergangstemperatur Tg von größer als oder gleich 20 °C hat, und wobei der Gesamtgehalt des Weichmachersystems in der Zusammensetzung 0 bis 17 phe, vorzugsweise 0 bis 11 phe beträgt.

9. Reifen (1) nach einem der vorhergehenden Ansprüche, **dadurch gekennzeichnet, dass** das Copolymer auf Basis von Styrol und Butadien eine Glasübergangstemperatur Tg von -60 °C bis -40 °C hat.

10. Reifen (1) nach einem der vorhergehenden Ansprüche, **dadurch gekennzeichnet, dass** das Copolymer auf Basis von Styrol und auf Basis von Butadien ein Styrol-Butadien-Copolymer ist.

11. Reifen (1) nach Anspruch 10, **dadurch gekennzeichnet, dass** die Elastomermatrix ferner mindestens ein zweites Dienelastomer beinhaltet, das sich von dem Copolymer auf Basis von Styrol und Butadien unterscheidet.

12. Reifen (1) nach einem der vorhergehenden Ansprüche, wobei die Gürtelverstärkung (3) mindestens zwei Arbeitsgürtellagen aus Festigkeitsträgerelementen (31, 33) umfasst, **dadurch gekennzeichnet, dass** die mindestens eine Lage aus umfänglichen Festigkeitsträgerelementen (32) radial zwischen zwei Arbeitsgürtellagen aus Festigkeitsträgerelementen (31, 33) angeordnet ist.

13. Reifen (1) nach einem der vorhergehenden Ansprüche, **dadurch gekennzeichnet, dass** die Gürtelverstärkung (3) mindestens zwei Arbeitsgürtellagen aus Festigkeitsträgerelementen (31, 33) umfasst, die vorzugsweise nicht dehnbar sind und sich von einer Lage zur anderen kreuzen, wobei sie mit der Umfangsrichtung Winkel zwischen 10° und 45° bilden.

14. Reifen (1) nach einem der vorhergehenden Ansprüche, **dadurch gekennzeichnet, dass** die Festigkeitsträgerelemente der mindestens einen Lage aus umfänglichen Festigkeitsträgerelementen (32) metallische Festigkeitsträgerelemente sind, die einen Sekantenmodul bei 0,7 % Dehnung zwischen 10 und 120 GPa und einen maximalen Tangentenmodul von weniger als 150 GPa aufweisen.

15. Reifen (1) nach einem der vorhergehenden Ansprüche, **dadurch gekennzeichnet, dass** die Gürtelverstärkung (3) radial außen um mindestens eine zusätzliche Lage (34), Schutzlage genannt, aus sogenannten elastischen Festigkeitsträgerelementen ergänzt wird, die bezogen auf die Umfangsrichtung mit einem Winkel zwischen 10° und 45° und mit der gleichen Richtung wie der Winkel, der von den Festigkeitsträgerelementen der zu ihr radial benachbarten Arbeitslage (33) gebildet wird, ausgerichtet sind.

## Claims

1. Tyre (1) with a radial carcass reinforcement (2), comprising a crown reinforcement (3), itself capped radially by a tread (4), the said tread being joined to two beads via two sidewalls, the crown reinforcement (3) having at least one layer of circumferential reinforcing elements (32), the said tread having at least one layer of polymeric compound forming a tread surface (5) intended to come into contact with a roadway, **characterized in that** the thermal conductivity of the said layer of polymeric compound forming the tread surface is strictly less than 0.270 W/(m.K), the thermal conductivity being measured in accordance with the standard ISO 8302:1991, **in that** the said layer of polymeric compound forming the tread surface is formed of a rubber composition based on at least one elastomer matrix predominantly comprising a copolymer that is based on styrene and butadiene and has a glass transition temperature Tg strictly greater than -65°C and less than or equal to -30°C, and **in that,** in a radial plane, over at least 50% of the meridian profile of the tyre, the thickness (E) of rubber compound between the inner surface (10) of the cavity (8) of the tyre and that point of a metal reinforcing element of the carcass reinforcement that is closest to the said inner surface of the cavity is less than 4.5 mm.

2. Tyre (1) according to Claim 1, **characterized in that,** in a radial plane, the thickness (E) of rubber compound between the inner surface of the cavity (7) of the tyre and the point of a metal reinforcing element of the carcass reinforcement that is closest to the said inner surface of the cavity is less than 4.5 mm over at least 70% of the meridian profile of the tyre, and preferably over at least 80% of the meridian profile of the tyre.

3. Tyre (1) according to Claim 1 or 2, **characterized in that** the rubber composition of the said at least one layer of polymeric compound forming the tread surface of the tyre includes at least one reinforcing filler predominantly comprising an inorganic reinforcing filler.

4. Tyre (1) according to Claim 3, **characterized in that** the inorganic reinforcing filler is silica.

5. Tyre (1) according to one of the preceding claims, the rubber compound between the cavity of the tyre and the reinforcing elements of the radially innermost carcass reinforcement layer being made up of at least two layers of rubber compound, **characterized in that,** in a radial plane, over at least that part of the meridian profile of the tyre in which the thickness of rubber compound between the inner surface of the cavity of the tyre and that point of a metal reinforcing element of the carcass reinforcement that is closest to the said inner surface of the cavity is less than 4.5 mm, the radially innermost layer of rubber compound (15) has a thickness (e₂) less than 2 mm and preferably less than 1.8 mm.

6. Tyre (1) according to one of the preceding claims, the rubber compound between the cavity of the tyre and the reinforcing elements of the radially innermost carcass reinforcement layer being made up of at least two layers of rubber compound (14, 15), **characterized in that,** in a radial plane, over at least that part of the meridian profile of the tyre in which the thickness of rubber compound between the inner surface of the cavity of the tyre and that point of a metal reinforcing element of the carcass reinforcement that is closest to the said inner surface of the cavity is less than 4.5 mm, the layer of rubber compound (14) that is radially adjacent to the radially innermost layer of rubber compound has a thickness (e₁) less than 2.5 mm and preferably less than 2 mm.

7. Tyre (1) according to one of the preceding claims, **characterized in that** the thermal conductivity of the said layer of polymeric compound forming the tread surface is strictly less than 0.265 W/(m.K).

8. Tyre (1) according to one of the preceding claims, **characterized in that** the rubber composition of the said at least one layer of polymeric compound forming the tread surface of the tyre has a plasticizing system comprising from 0 to 15 phr, preferably from 0 to 9 phr, of at least one plasticizing resin having a glass transition temperature Tg greater than or equal to 20°C, and for which the total content of the plasticizing system in the composition ranges from 0 to 17 phr, preferably from 0 to 11 phr.

9. Tyre (1) according to one of the preceding claims, **characterized in that** the copolymer based on styrene and butadiene has a glass transition temperature Tg ranging from -60°C to -40°C.

10. Tyre (1) according to one of the preceding claims, **characterized in that** the copolymer based on styrene and based on butadiene is a styrene-butadiene copolymer.

11. Tyre (1) according to Claim 10, **characterized in that** the elastomer matrix further comprises at least a second diene elastomer different from the copolymer based on styrene and butadiene.

12. Tyre (1) according to one of the preceding claims, the crown reinforcement (3) comprising at least two working crown layers of reinforcing elements (31, 33), **characterized in that** the layer of circumferential reinforcing elements (32) is positioned radially between two working crown layers of reinforcing elements (31, 33).

13. Tyre (1) according to one of the preceding claims, **characterized in that** the crown reinforcement (3) comprises at least two working crown layers of reinforcing elements (31, 33), preferentially inextensible, crossed from one layer to the other, making angles of between 10° and 45° with the circumferential direction.

14. Tyre (1) according to one of the preceding claims, **characterized in that** the reinforcing elements of at least one layer of circumferential reinforcing elements (32) are metal reinforcing elements having a secant modulus at 0.7% elongation of between 10 and 120 GPa and a maximum tangent modulus of less than 150 GPa.

15. Tyre (1) according to one of the preceding claims, **characterized in that** the crown reinforcement (3) is supplemented radially on the outside by at least one additional layer (34), referred to as a protective ply, of "elastic" reinforcing elements, oriented at an angle of between 10° and 45° relative to the circumferential direction and of the same direction as the angle formed by the inextensible elements of the working crown layer of reinforcing elements (33) which is radially adjacent thereto.
